# EUROPEAN PATENT SPECIFICATION

(11) **EP 2 903 909 B1**
(45) Date of publication and mention of the grant of the patent: **31.03.2021**
(21) Application number: 13838847.5
(22) Date of filing: 13.09.2013
(51) Int. Cl.: B32B 7/12, B32B 9/02, B32B 9/04, B32B 27/32

(54) **FOOD PACKAGE**
LEBENSMITTELVERPACKUNG
EMBALLAGE ALIMENTAIRE

(30) Priority: 21.09.2012 AU 2012904120
(43) Date of publication of application: 12.08.2015
(73) Proprietor: Plantic Technologies LTD, Altona, VIC 3018 (AU)
(72) Inventor: MORRIS, Brendan, Leigh, Manifold Heights Victoria 3218 (AU); JACKA, David, Colin, Ascot Vale Victoria 3032 (AU)
(74) Representative: V.O.
(86) International application number: PCT/AU2013/001045
(87) International publication number: WO 2014/043744

(56) References cited:
- WO-A1-2006/042364
- WO-A1-2012/137014
- WO-A1-2013/090973
- WO-A1-2013/090973
- US-A- 4 393 106
- US-A1- 2006 260 973
- US-A1- 2009 312 462
- US-A1- 2009 312 462
- US-B1- 6 242 102

## Description

### FIELD OF THE INVENTION

The present invention relates to a food package and to methods for its manufacture. The food package finds particular, although not exclusive, use in the packaging of perishable foodstuffs.

### BACKGROUND TO THE INVENTION

Polymeric materials find widespread use as packaging in the food industry. In such application not only does the packaging material have to contain the foodstuff, it must often preserve the product and, indeed, attractively display the product to the discerning consumer. Many foods are by their nature perishable and the properties of the packaging material will greatly impact the useful shelf life of a given foodstuff. Chemical changes, such as oxidation, and microbiological growth can be accelerated in the presence of oxygen. Accordingly, controlling the oxygen content in a package or the rate of oxygen ingress into a package is often one of the most critical attributes of food packaging. Breathability of the food package may also be important in releasing gases from the package during food storage.

In a modified atmosphere package, the product is exposed inside the pack to the normal atmospheric gases (oxygen, nitrogen, carbon dioxide and water vapour) but in concentrations which are different from those in the ambient air. The packaging usually consists of a polymeric film pouch or plastic container with a specified gas permeability. Multilayer barriers are often utilized.

Multilayer barrier packaging is usually constructed with a polar polymer as an internal layer which is covered with apolar polymer. The former acts as a gas barrier and the latter as a hydrophobic skin having a low water vapour transmission rate to prevent fast water absorption in the internal layer. Polyolefin skin layers covering a polar polymer layer are commonly utilised, for example, a polyethylene skin covering a polyethylene-vinyl alcohol copolymer (PE-EVOH).

EVOH copolymers show good oxygen barrier properties at low humidity, typically in the range of 0 to 60%. However, their gas barrier property deteriorates dramatically under high humidity conditions when the humidity is in the range of 75 to 90%. In fact, due to the polar nature of EVOH, such films generally exhibit poor moisture barrier. Therefore, EVOH is typically laminated with polyolefins on both sides to provide barrier properties for practical packaging applications in order to protect the EVOH from humidity effects. However, over time sufficient moisture may permeate the polyolefin hydrophobic skin such that the oxygen barrier properties of the EVOH layer will be compromised.

EVOH materials also require the use of adhesion promoters and/or tie-layer resins in order for them to bond adequately to polyolefin substrates. Without such tie resins, EVOH materials tend to peel off easily from the polyolefin substrate resulting in loss of barrier properties and poor appearance. A further disadvantage of EVOH is that it is relatively expensive. Additionally, from a renewable standpoint, EVOH is fully derived from fossil fuels.

In relation to the packaging of certain foodstuffs, such as whole poultry, existing methods include the use of a polymer based bag which is sealed by way of a metal clip. These clips can pose a safety hazard, if, for example, they find their way into the package. Therefore it would be desirable to provide a packaging solution that would eliminate the need for metal clips. Further, it would be advantageous to improve the visual presentation of foods through the provision of new packaging solutions. Additionally, packaging designs that allow automation of the packaging process would also be desirable.

US 2009/0312462 discloses a polymer composition including starch, a water soluble polymer such as polyvinyl alcohol, and one or more polyol plasticisers. The compositions may be fabricated into films for use in packaging. The films have oxygen and carbon dioxide barrier properties.

US 2006/0260973 discloses a blister package comprising a backing sheet adhered to a blister in which at least one or both of the backing sheet and the blister is made from a water soluble polymer composition comprising a modified starch

WO 2006/042364 A1 discloses a film forming barrier polymer having the composition on dry basis: a) from 45 to 90% by weight of a starch and/or a modified starch selected from starches modified by reaction with a hydroxyl alkyl group, an acetate or a dicarboxylic acid anhydride or a grafting polymer; b) from 4 to 12% by weight of a water soluble polymer; c) from 5 to 45% by weight of a non-crystallising mixture of sorbitol and at least one other plasticizer; d) from 0.3 to 2.5 % by weight of a C12-22 fatty acid or salt; e) from 0.25% to 3% of an emulsifier system. The film obtained from this composition may be laminated with other packaging polymers such as PET, PE, (BO)PP, LDPE and polylactic acid by co-extrusion, co-injection moulding, film blowing or thermal lamination techniques. Various uses as preforms in forming beverage bottles for soft drinks, beer or condiments, containers for soups juices and processed fruits, bottles for food and pharmaceutical applications, snack wraps or thin film lids for modified atmosphere packaging of products such as meat, are mentioned therein. The degree of substitution of the starch is preferably 0.05 to 2. The thickness of the barrier film is in the range 5 to 20% of the total thickness of the multilayer structure it is part of.

### SUMMARY OF THE INVENTION

According to a first aspect there is provided a food package comprising:
(a) a support member comprising a multilayer film comprising:
   (i) at least one starch layer comprising a modified starch and a water soluble polymer selected from the group consisting of polyvinyl acetate, polyvinyl alcohol or mixtures thereof; and
   (ii) at least one other layer having a water vapour permeability coefficient less than 1 g.mm/m².24hr.atm measured at 38°C and 90% relative humidity as measured using ASTM F 1249-01, said at least one other layer comprising a polyolefin, polyethylene terephthalate, polyvinyl chloride and polyvinyl dichloride or mixtures thereof; and
   wherein the total thickness of the at least one starch layer is greater than 30 % of the total thickness of the multilayer film and wherein the modified starch has a degree of substitution less than 1.5; and
(b) a lidding film wherein the lidding film is sealed to the support member such that a food product is enclosed thereby.

Preferably the water vapour permeability coefficient of the at least one other layer is less than 0.5 g.mm/m².24hr.atm measured at 38°C and 90% relative humidity, more preferably less than 0.2 g.mm/m².24hr.atm measured at 38°C and 90% relative humidity.

Preferably the total thickness of the at least one starch layer is greater than 40% of the total thickness of the multilayer film, even more preferably greater than 50% of the total thickness of the multilayer film. In some embodiments the total thickness of the at least one starch layer is greater than 60% of the total thickness of the multilayer film.

The multilayer film has a low oxygen permeability coefficient (OPC). In some embodiments, the multilayer film has an OPC less than 0.6 cm³ mm/m².24h.atm at 50% relative humidity (RH). Preferably the multilayer film has an OPC of less than 0.3 cm³ mm/m².24h.atm at 50% RH and more preferably an OPC of less than 0.2 cm³ mm/m².24h.atm at 50% RH. Most preferably, the multilayer film has an OPC of less than 0.1 cm³ mm/m².24h.atm at 50% RH and particularly preferably the multilayer film has an OPC of less than 0.05 cm³mm/m².24h.atm at 50% RH.

In some embodiments, the multilayer film has an OPC less than 1.2 cm³ mm/m².24h.atm at 75% relative humidity (RH). Preferably the multilayer film has an OPC of less than 0.6 cm³ mm/m².24h.atm at 75% RH and more preferably an OPC of less than 0.2 cm³ mm /m².24h.atm at 75% RH. Most preferably, the multilayer film has an OPC of less than 0.1 cm³ mm/m².24h.atm at 75% RH and particularly preferably the multilayer film has an OPC of less than 0.05 cm³ mm/m².24h.atm at 75% RH.

In some embodiments, the OPC remains below 0.05 cm³ mm/m².24h.atm at 50% RH, for extended periods of time. Preferably the OPC remains below 0.05 cm³ mm/m².24h.atm at 50% RH for at least ten days, more preferably the OPC remains below 0.05 cm³ mm/m².24h.atm at 50% RH for 20 days, most preferably the OPC remains below 0.05 cm³ mm/m².24h.atm at 50% RH for thirty days. In a particularly preferred embodiment the OPC remains below 0.05 cm³ mm/m².24h.atm at 50% RH for thirty days.

Accordingly, the multilayer films have an enhanced performance in respect of oxygen barrier properties over long periods of time. While not wishing to be bound by theory it is considered that the high moisture capacity of the at least one starch layer acts to extend the lifetime of the oxygen barrier effect, even when moisture levels within the at least one starch layer are relatively high.

Advantageously, from a renewable perspective the multilayer film contains a high proportion of biodegradable starch.

The thickness of the multilayer film and of each layer within the multilayer film may vary depending on the exact nature of the end use application.

Preferably, the total thickness of the multilayer film is between 10 and 1000 microns. In one embodiment the total thickness of the multilayer film is between 10 and 100 microns, more preferably between 20 and 80 microns. In another embodiment the total thickness of the multilayer film is between 100 and 1000 microns more preferably between 200 and 800 microns.

In some embodiments, the total thickness of the at least one starch layer is between 5 and 600 microns. In one embodiment, the total thickness of the at least one starch layer is between 5 and 50 microns, preferably between 10 and 40 microns. In other embodiments, the total thickness of the at least one starch layer is between 100 and 600 microns, preferably between 150 and 450 microns.

In some embodiments, the total thickness of the at least one other layer is between 5 and 400 microns. In one embodiment, the total thickness of the at least one other layer is between 5 and 25 microns preferably between 10 and 20 microns. In another embodiment, the total thickness of the at least one other layer is between 30 and 400 microns, preferably between 30 and 300 microns.

In a preferred embodiment the at least one starch layer has a total thickness between 100 and 600 micron and the at least one other layer has a total thickness between 10 and 400 micron. In another preferred embodiment the at least one starch layer has a total thickness between 100 and 400 micron and the at least one other layer has a total thickness between 40 and 250 micron.

In another preferred embodiment the at least one starch layer has a total thickness between 10 and 60 micron and the at least one other layer has a total thickness between 5 and 40 micron.

### Other Layer

The other layer(s) may be chosen to impart certain physical and aesthetic properties to finished multilayer film. These properties may include, for example, antifog, strength, heat sealability, colour, or clarity. In some embodiments particularly preferred other layers are those having a low water vapour transmission rate.

The at least one other layer comprises a polyolefin, polyethylene terephthalate, polyvinylchloride and polyvinylidene dichloride or mixtures thereof. In one embodiment each of the other layers may comprise a mixture of components. In other embodiments one or more of the other layers may consist of multiple layers of different materials. In further embodiments each of the other layers may comprise different materials.

In some embodiments suitable polyolefins for the preparation of the polyolefin film layer are selected from the group consisting of ethylene homopolymers, propylene homopolymers, interpolymers of ethylene and propylene and interpolymers of ethylene or propylene with one or more C₄-C₁₀ α-olefins, cyclic olefin polymers and copolymers, biaxially orientated polypropylene, and mixtures thereof.

In some embodiments suitable polyolefins are selected from copolymers of ethylene or propylene and one or more α-olefins. Both high density polyethylenes and linear low density polyethylenes may be preferably utilised.

Suitable linear low density polyethylenes (LLDPE) include copolymers of ethylene and α-olefins (about 5 to about 15 wt.%). Alpha-olefins include 1-butene, 1-hexene, 1-octene, and the like, and mixtures thereof. The density of LLDPE is within the range of about 0.865 to about 0.925 g/cm³

Suitable high density polyethylenes (HDPE) include ethylene homopolymers and copolymers of ethylene and α-olefins (about 0.1 to about 10 wt. %). Suitable alpha-olefins include 1-butene, 1-hexene, 1-octene, and the like, and mixtures thereof. The density of HDPE is preferably from about 0.940 to about 0.970 g/cm³.

Suitable cyclic olefin polymers and copolymers include polymers of norbornene or tetracyclododecene and copolymers of norbornene or tetracyclododecene with one or more α-olefins. Examples are cyclic olefin polymers are Topas (Ticona) and Apel (Mitsui).

In some embodiments blends of polyolefins and other polymers may be advantageously employed. Cast polypropylene (cPP) or biaxially oriented polypropylene (BOPP) may be chosen for improved strength and low WVTR. Polyethylene terephthalate (PET) may be chosen for strength and shrinkability.

In other embodiments modified polyolefins, such as grafted polyolefins, may be utilised. A preferred grafted polyolefin is a maleic anhydride grafted polyolefin.

### Starch Layer

The multilayer film comprises at least one starch layer comprising a modified starch, wherein the modified starch has a degree of substitution less than 1.5. The degree of substitution defines the average number of substituents per anhydroglucose unit. Accordingly, by definition, the maximum possible degree of substitution of starch is 3.0.

In one embodiment the at least one starch layer comprises a high amylose starch. Preferably, the amount of high amylose starch is between 5 and 80% by weight based on the total weight of the starch layer.

In another embodiment the modified starch is chemically modified so as to replace hydroxyl functionality with functionality selected from the group consisting of ethers and esters and mixtures thereof. Preferred esters comprise heptanoate or lower homologues. Particularly preferred esters include acetate.

In a further embodiment the modified starch is modified to include a hydroxyalkyl C₂₋₆ group or modified by reaction with an anhydride of a carboxylic acid. Preferably the modified starch is modified to include a hydroxy C₂₋₄ group. More preferably the modified starch is modified to include a hydroxy propyl group.

The at least one starch layer comprises a water soluble polymer. Preferably, the starch layer comprises 1 to 20% by weight of a water soluble polymer, more preferably from 4 to 12% by weight of a water soluble polymer. Water soluble polymers are selected from the group consisting of polyvinylacetate, polyvinyl alcohol or mixtures thereof. Polyvinyl alcohol is a particularly preferred water soluble polymer.

In some embodiments the at least one starch layer may comprise water, preferably up to 20% by weight water, more preferably up to 12% by weight water. In some embodiments the water may serve as a plasticiser.

In some embodiments the moisture content of the at least one starch layer is generally the equilibrium moisture content at the environmental %RH. For example, the equilibrium moisture content ranges from about 4% at low %RH to more than 15% at high %RH.

In a still yet further embodiment the at least one starch layer comprises one or more polyol plasticisers, preferably up to 20% by weight of one or more polyol plasticisers, more preferably up to 12% by weight of one or more polyol plasticisers. Exemplary, but non-limiting, polyol plasticisers are selected from the group consisting of sorbitol, glycerol, maltitol, xylitol, and mixtures thereof.

In another embodiment the at least one starch layer may also comprise up to 50% by weight of natural unmodified starch.

In some embodiments the at least one starch layer comprises mixtures of starches and/or modified starches, for example, mixtures of high and low amylose starch, wherein one or more of the starch components may be modified.

In a further embodiment the at least one starch layer comprises a lubricant. Preferred lubricants are C₁₂₋₂₂ fatty acids and/or C₁₂₋₂₂ fatty acid salts. Preferably, the C₁₂₋₂₂ fatty acid and/or a C₁₂₋₂₂ fatty acid salt are present in an amount up to 5% by weight.

In some embodiments the at least one starch layer comprises one or more nanomaterials. Preferably, the nanomaterials are exfoliated within a starch nanocomposite. Exemplary nanomaterials include clays and modified clays particularly 'hydrophobically modified layered silicate clays'. Preferred clays include montmorillonite, bentonite, beidelite, mica, hectorite, saponite, nontronite, sauconite, vermiculite, ledikite, magadite, kenyaite, stevensite, volkonskoite or a mixture thereof.

A 'hydrophobically modified layered silicate clay' or 'hydrophobic clay' is preferably a clay modified by exchange with a surfactant comprising long chain alkyl groups such as a long chain alkylammonium ion, for example, mono- or di-C₁₂-C₂₂ alkylammonium ion, wherein polar substituents such as hydroxyl or carboxyl are not attached to the long chain alkyl. Examples of suitable clays include CLOISITE® 20A or CLOISITE® 25A from Southern Clay Products Inc.

In some embodiments the starch layer and/or the other layer may comprise colourants.

### Adhesive

In some embodiments the at least one other layer may be fixed to the at least one starch layer through use of a suitable adhesive. This assists in minimising slip and therefore maintaining excellent barrier performance. Numerous suitable adhesives would be readily apparent to those having skill in the present art. Preferably the adhesive is selected so as to chemically bond to the at least one starch layer. Preferred adhesives comprise one or more polyurethanes.

Advantageously, the use of an adhesive overcomes or minimises the need for modified or grafted other layers to be utilised as tie layers. Accordingly, for example, standard film polyethylene grades may be successfully employed as polyolefin other layers in the multi-layer film. This is desirable from a cost consideration.

Other suitable adhesives include EVA copolymers, acrylic copolymers and terpolymers, ionomers, metallocene derived polyethylene, ethylene acrylic ester terpolymers and ethylene vinyl acetate terpolymers.

Those skilled in the art will be familiar with other adhesive lamination technology that would be suitable for adhering various types of plastics, including heat activated and UV activated systems. Exemplary adhesives include, polyurethane, epoxy, nylon, acrylic and acrylate.

### Method of Preparation of the Multilayer Film

The multilayer film can be made by a variety of processes. The multilayer film can be made by co-extrusion, coating, and other laminating processes. The film can also be made by casting or blown film processes.

Coextrusion tends to use tie layers, and utilises modified other layers, such as modified (grafted) polyolefins. Coextrusion is generally able to achieve thinner overall gauges. Lamination is more suitable for thicker multilayer films utilising an adhesive.

In one embodiment a three layer film is provided comprising an inner starch layer and two outer polyolefin layers. In other embodiments adhesive layers may be employed between the starch layer and the polyolefin layers thus yielding a five layer film.

It should be understood by those with skill in the art that a three or five layer film is only one of many possible embodiments that employs starch and other layers. The number of layers and their relative thicknesses may be adjusted depending on the function or end-use of the film.

Additionally, further film layers comprising other materials commonly utilised in barrier film applications may be envisaged. Exemplary further film layers include metallised films, non-polymer films and the like.

### Design of the Support Member

The support member comprising the multilayer film may be of various designs, depending on the nature of the foodstuff to be packaged. For example, the support member should be thick enough so as to adequately contain the foodstuff, which would generally depend on the weight of the foodstuff. Further, the shape of the support member may vary depending on the specific food to be packaged. For example, in providing a package for a whole chicken, the sides of the support member may advantageously be of sufficient height so as to 'plump' the chicken, thus enhancing presentation.

The support member may be advantageously formed from the multilayer film through thermoforming processes.

### Lidding Film

In some embodiments the lidding film has a higher water vapour permeation rate and higher gas permeation rate than that of the multilayer film. The water vapour permeability coefficient of the lidding film is preferably greater than 1 g.mm/m².24hr.atm measured at 38°C and 90% relative humidity. Preferably the lidding film has an oxygen permeability coefficient greater than 0.6 cm³ mm/m².24h.atm at 50% relative humidity (RH).

Preferred materials for lidding films include polyolefins such as polyethylene and polypropylene, polyethylene terephthalate, polystyrene, polyvinyl chloride, polyvinylidene dichloride, nylon, starch, polycarbonate, ethylene vinyl acetate and ethylene vinyl alcohol. The lidding film may comprise a single layer or may comprise a multilayer material having combinations of the aforementioned materials. Lidding films may be gas barrier or permeable shrink or non-shrink films. Preferably, the lidding film is heat shrinkable. The lidding film may be flexible or rigid depending on the application.

In some embodiments the lidding film controls the barrier or breathability function of the food package. For barrier function preferred lidding film materials include ethylene vinyl alcohol, starch and nylon. For breathable lidding films preferred materials include polyolefins such as polyethylene.

Where a starch layer is employed in the lidding film it may include any of the embodiments herein disclosed in respect of the starch layer utilized in the multilayer film.

The thickness of the lidding film is dependent on whether it is to be utilized as a flexible or rigid structure. Where a flexible structure is desired, the thickness of the lidding film is preferably between 5 micron and 200 micron, more preferably between 15 micron and 100 micron, most preferably between 25 micron and 70 micron. When a more rigid structure is desired, for example in so called 'dome pack' applications, the lidding film thickness is preferably between 200 micron to 750 micron, more preferably between 300 micron to 500 micron.

The lidding film may be hermetically sealed to the support member through commonly used methods in the industry such as by the use of a shaped heat sealing bar applying sufficient pressure to the seal area. Rigid packs may require top and bottom seal heating. The latent shrink energy in the films is triggered by the radiant heat from the seal bar or by an external hot water shrink tunnel as a secondary process.

The food package may be gas flushed so as to provide a suitable atmosphere for food storage. The nature of the gas(es) may vary depending on the nature of the foodstuff and the packaging goal. Modified atmosphere packaging technology may be employed, as may permeable or breathable technology.

In another embodiment the package may be subjected to vacuum after inclusion of the foodstuff.

### Food Package

Packages made from different polymeric materials will be permeable to different degrees to small molecules, for example gases and water vapour. Further, different materials will have different permeabilities to different molecules. The following Table indicates the relative value of permeabilities for several polymers in respect of the three most commonly utilized gases in modified atmosphere packaging.

| **Polymer** | **N₂** | **O₂** | **CO₂** |
|---|---|---|---|
| Polystyrene | 1 | 2.6 | 10.4 |
| LLDPE | 1 | 3.1 | 11.1 |
| LDPE | 1 | 3.1 | 10.7 |
| HDPE | 1 | 3.2 | 11.9 |
| PP | 1 | 4.3 | 13.6 |
| Nylon 6 | 1 | 3.4 | 18.4 |
| PET | 1 | 3.6 | 17.8 |

Accordingly, through appropriate choice of materials, the relative rates of small molecule permeation may be varied and controlled. This may be achieved through variation of material in a single layer or by variation of one or more materials in multiple layers. Alternatively or additionally it may be achieved through varying the thickness of one or more layers in single or multiple layer films.

Clearly this concept would not be limited to the above tabulated materials but would extend to other materials such as starch and ethylene vinyl alcohol based materials.

This concept may apply to the multilayer film and/or to the lidding film of the presently disclosed food package. Accordingly, this concept gives flexibility in achieving targeted or desirable gas permeation rates which may be tuned to a particular modified atmosphere package gas mix and the gas generation and absorption characteristics of the product. For high value products, such as specialty meats, the increase in shelf life may offset the use of higher complexity packaging.

In a further aspect there is provided a use of the food package according to any of the aforementioned embodiments, for packaging foodstuffs. Exemplary foodstuffs are red meat, poultry, such as chicken, duck, goose, turkey and the like, fish or shellfish, prepared meals either in a raw, partially cooked or fully cooked state, cooked or partially cooked vegetables.

In a further aspect there is provided a method of preparing a packaged food product comprising the steps of:
a) providing a support member according to any of the aforementioned embodiments;
b) providing a lidding film;
c) placing a food product on the support member;
d) extending the lidding film above the support member and product; and
e) sealing the lidding film to the support member such that the product is
   enclosed thereby.

The lidding film may be as disclosed in any of the aforementioned embodiments.

Preferably the method is performed using automated packaging equipment such as, for example, 'form and fill' equipment or 'thermoforming' equipment. In a preferred embodiment the support member is thermoformed. Automation advantageously allows for continuous production and use of printed lidding film, controlled date stamping and labeling, if utilised. Automation may also provide automatic loading of the foodstuff onto the formed support member. Sequential traceability and batch control may also be appropriate.

Throughout this specification, use of the terms "comprises" or "comprising" or grammatical variations thereon shall be taken to specify the presence of stated features, integers, steps or components but does not preclude the presence or addition of one or more other features, integers, steps, components or groups thereof not specifically mentioned.

### DETAILED DESCRIPTION OF THE INVENTION

It will now be convenient to describe the invention with reference to particular embodiments and examples. These embodiments and examples are illustrative only and should not be construed as limiting upon the scope of the invention. It will be understood that variations upon the described invention as would be apparent to the skilled addressee are within the scope of the invention. Similarly, the present invention is capable of finding application in areas that are not explicitly recited in this document and the fact that some applications are not specifically described should not be considered as a limitation on the overall applicability of the invention.

### Polyolefins

Suitable LLDPE, HDPE and polypropylene can be produced by a Ziegler, single-site, or any other olefin polymerization catalyst. Ziegler catalysts and cocatalysts are well known in the art. Metallocene single-site catalysts are transition metal compounds that contain cyclopentadienyl (Cp) or Cp derivative ligands. For example, U.S. Pat. No. 4,542,199 teaches the preparation of metallocene catalysts. Non-metallocene single-site catalysts containing heteroatomic ligands, e.g., boraaryl, pyrrolyl, azaborolinyl or quinolinyl are also well known in the art.

The HDPE can also be multimodal. By "multimodal" it is meant that the polymer comprises at least two components, one of which has a relatively low molecular weight, the other a relatively high molecular weight. The multimodal polyethylene can be produced by polymerization using conditions that create a multimodal polymer product. This can be accomplished by using a catalyst system with two or more different catalytic sites or by using two or multi-stage polymerization processes with different process conditions in the different stages (e.g. different temperatures, pressures, polymerization media, hydrogen partial pressures, etc). Multimodal HDPE may be produced by a multistage ethylene polymerization, using a series of reactors, with comonomer addition in only one of the reactors.

### Modified Starch

A preferred modified starch component is hydroxypropylated amylose starch. Other substituents may be hydroxyethyl or hydroxybutyl to form hydroxyether substitutions, or anhydrides such as maleic phthalic or octenyl succinic anhydride can be used to produce ester derivatives. The degree of substitution (the average number of hydroxyl groups in a unit that are substituted) is preferably 0.05 to 1.5. A preferred starch is a high amylose maize starch. Another preferred starch is a high amylose tapioca starch. A preferred modified starch component is a hydroxypropylated high amylose starch (for example ECOFILM® marketed by National Starch and Chemical Company, or Gelose® A939 marketed by Penford).

The other starch component, if utilised, is any commercially available starch. This may be derived from, for example, wheat, maize, tapioca, potato, rice, oat, arrowroot, and pea sources. These starches may also be chemically modified.

### Water Soluble Polymer

The water soluble polymer component of the starch layer is preferably compatible with starch, water soluble, biodegradable and has a low melting point compatible with the processing temperatures for starch. Polyvinyl alcohol is a preferred polymer but polymers of ethylene-vinyl alcohol, ethylene vinyl acetate or blends with polyvinyl alcohol may be used. A preferred concentration range 4 to 12% by weight, more preferably 8% - 12%.

### Plasticiser

A range of plasticisers and humectants are useful additions to the starch layer, in order to aid processing and control and stabilize the mechanical properties of the barrier material, in particular in reducing dependency on moisture content and relative humidity. The desired plasticiser content depends primarily on the required processing behaviour during a (co)-extrusion process and subsequent blowing or stretching processes as well as on the required mechanical properties of the end product.

Cost and food contact are important issues in choosing the appropriate plasticizer. The preferred plasticizer is a mixture of polyols, such as mixtures of two or more, or three or more, or four or more, of sorbitol, glycerol, maltitol, mannitol, xylitol and erythritol. Alternatively, sorbitol, and one or more other polyols, particularly glycerol, maltitol, mannitol and xylitol are suitable, although erythritol, ethylene glycol and diethylene glycol are also suitable. The plasticizer plays a triple role:
1. it provides suitable rheology for the extrusion compounding process and for the lamination process,
2. it positively affects the mechanical properties of the product and,
3. it may act as an anti-retrogradation or anti-crystallizing agent.

The preferred plasticizer content is up to 20% by weight of the starch layer depending on the particular application and co-extrusion or lamination process.

Sorbitol, glycerol and maltitol blends are particularly suitable for modifying the mechanical properties of the formulation, as is xylitol and blends of xylitol with sorbitol and glycerol. The larger the number of OH groups, the more effective the plasticiser is in reducing crystallisation. Sorbitol, maltitol and xylitol are particularly good humectants. Glycerol helps dissolve polyvinylalcohol during processing. Crystallisation is observed when sorbitol is used on its own. Some polyols (sorbitol and glycerol in particular) may exhibit migration to the surface, where either an opaque crystalline film may form in the case of sorbitol, or an oily film in the case of glycerol. Blending various polyols inhibits this effect to varying degrees. Stabilisation may be enhanced with the addition of glycerol monostearate and sodium stearoyl lactylate as emulsifiers. Furthermore, synergistic effects with salt result in stronger effects on mechanical properties.

### Other Plasticizers

Polyethylene glycol compounds may be used as emulsifying agents, plasticizers or humectants. Polyethylene oxide and polyethylene glycol alternately or together may also provide an increased water resistance, to prevent swelling which may result in delamination in multi-layer structures (MLS).

An alternative plasticiser is epoxidized linseed oil or epoxidized soybean oil. Being hydrophobic these additives may improve moisture sensitivity of the material. These plasticisers, preferably stablilized with an emulsifying system, aid processing but do not result in a significant further reduction in Young's modulus. Other plasticizers more commonly used in the PVC industry may be suitable, including tributyl citrate, 2,2,4 trimethyl-1,3-pentanediol diisobutyrate, and acetyl tri-ethyl citrate.

One may use up to 20% of a humectant or water binding agent or gelling agent which may act as a (co)plasticiser such as carrageenan, xanthan gum, gum arabic, guar gum or gelatine. Other humectants may be used such as sugar or glucose. Biopolymers such as carrageenan, typically used in food products as thickeners and partially soluble in cold water, fully soluble in hot water, are suitable to tailor mechanical properties. By binding water these components may have a significant plasticizing function. Gelatine may be added to improve the mechanical properties and reduce moisture sensitivity. Xanthan Gum has a high water holding capacity and also acts as an emulsifier and in starch compositions has an anti-retrogradation effect. Gum Arabic may also be used as a texturiser and film former, and the hydrophilic carbohydrate and hydrophobic protein enable its hydrocolloid emulsification and stabilization properties. Guar gum has similar anticrystallisation effects in starch compositions. Another suitable humectant is glyceryl triacetate.

### Fatty acid and/or fatty acid salt

Fatty acids and/or fatty acid salts may be used as lubricants. The starch layer preferably comprises between 0.1 to 1.5% by weight of a C₁₂₋₂₂ fatty acid and/or a C₁₂₋₂₂ fatty acid salt. The fatty acid and/or fatty acid salt component is more preferably present in concentrations of 0.6 to 1%. Stearic acid is a particularly preferred component. Sodium and potassium salts of stearic acid may also be used. Cost can be a factor in the choice of this component but lauric, myristic, palmitic, linoleic and behenic acids are all suitable.

### Adhesive

Polyurethane based adhesives are particularly suitable for fixing the other layer to the starch layer. The polyurethane adhesive may be prepared in situ through reaction of one or more isocyanates with the starch layer. Through reaction of the surface hydroxyl functions of the starch with isocyanate, urethane functions are formed. Preferred isocyanates are diisocyanates. Those skilled in the art would be able to select suitable isocyanates from the wide range typically employed in the art of polyurethane synthesis.

Alternatively, the polyurethane adhesive may comprise one or more polyols. Such two component systems comprising diisocyanate and polyol are well known in the art.

The adhesives may or may not contain solvent. The solvent may be organic or water based.

Exemplary isocyanates include methylene diphenyl diisocyanate and toluene diisocyanate. Exemplary polyols include polyether polyols such as polyethylene glycol or polypropylene glycol and polyester polyols such as adipate based polyols.

### EXAMPLES

OTR was measured using ASTM F 1927-98 and WVTR was measured using ASTM F 1249-01. All component weights are expressed on a dry basis.

### Example 1

A starch film was prepared by extrusion processing of a mixture of 88.5% by weight modified starch (ECOFILM®, National Starch and Chemical Company), 9% by weight polyvinylalcohol (Elvanol® 71-30), 2% by weight Cloisite 20A (Southern Clay Products) and 0.5% stearic acid and casting into a 300 µm sheet. This was then adhesively laminated on each side to 100 µm HDPE film using MOR Free PU adhesive (Rohm and Haas). The lamination was performed on a standard laminating machine.

Samples were conditioned for 2 weeks at 50% and 75 % RH (for OTR) and 38°C / 90% RH (for WVTR) and measured after equilibration.

Tables 1 and 2 collect the results.

| **TABLE 1** | | | | |
|---|---|---|---|---|
| **Sample** | **Nominal % of starch layer thickness** | **Oxygen Transmission Rate (cm³/m².24h at 23°C, 1 atm pure oxygen)** | | **Specimen thickness (micron)** |
| PE/Starch/PE | 60 | 50% RH | <0.05 | 507 |
| | | | <0.05 | 470 |
| | | 75% RH | <0.05 | 496 |
| | | | <0.05 | 468 |

| **TABLE 2** | | | |
|---|---|---|---|
| **Sample** | **Nominal % of starch layer thickness** | **Water Vapour Transmission Rate (g/m².24h at 38°C, 90%RH)** | **Specimen thickness (micron)** |
| PE/Starch/PE 100/300/100 | 60 | 3.3 | 507 |
| | | 3.2 | 470 |

### Examples 2 & 3

A starch film was prepared by extrusion processing of a mixture of 88.5% by weight modified starch (ECOFILM®, National Starch and Chemical Company), 9% by weight polyvinylalcohol (Elvanol® 71-30), 2% by weight Cloisite 20A (Southern Clay Products) and 0.5% stearic acid and casting into a 150 µm sheet. This was then adhesively laminated on each side to 50 µm (Example 2) or 35 µm (Example 3) HDPE using a polyurethane adhesive system from Specialty Adhesives and Coatings. The lamination was performed on a standard laminating machine.

Samples were conditioned for 2 weeks at 50% and 75 % RH (for OTR) and 38°C / 90% RH (for WVTR) and measured after equilibration.

Table 3 collects the results.

| **TABLE 3** | | | | | | | |
|---|---|---|---|---|---|---|---|
| **Sample** | **Nominal % of starch layer thickness** | **Oxygen Transmission Rate (cm³/m².24h)** | | | | **Water Vapour Transmission Rate (g/m².24h at 38°C, 90%RH)** | |
| | | 50% RH, 23°C | Thickness (micron) | 75% RH, 23°C | Thickness (micron) | WVTR | Thickness (micron) |
| Example 2 PE/Starch/PE | 60 | 0.55 | 258 | 0.91 | 265 | 3.00 | 260 |
| | | 0.46 | 262 | 0.98 | 254 | 3.22 | 255 |
| Example 3 PE/Starch/PE | 68 | 0.51 | 222 | 1.03 | 228 | 5.16 | 225 |
| | | 0.55 | 227 | 1.16 | 225 | 5.30 | 225 |

### Example 4

A starch film was prepared by extrusion processing of a mixture of 90.5% by weight modified starch (ECOFILM®, National Starch and Chemical Company), 9% by weight polyvinylalcohol (Elvanol® 71-30) and 0.5% by weight stearic acid and casting into a 350 µm sheet. This was then adhesively laminated on each side to 50 µm HDPE using a polyurethane adhesive system from Specialty Adhesives and Coatings. The lamination was performed on a standard laminating machine.

Samples were conditioned for 2 weeks at 50% and 75 % RH (for OTR) and 38°C / 90% RH (for WVTR) and measured after equilibration.

Table 4 collects the results.

| **TABLE 4** | | | | | | | |
|---|---|---|---|---|---|---|---|
| **Sample** | **Nominal % of starch layer thickness** | **Oxygen Transmission Rate cm³/m².24h** | | | | **Water Vapour Transmission Rate g/m².24h at 38°C, 90%RH** | |
| | | 50% RH, 23°C | Thickness (micron) | 75% RH, 23°C | Thickness (micron) | WVTR | Thickness (micron) |
| PE/Starch/PE | 78 | 0.05 | 465 | 0.15 | 465 | 3.25 | 472 |
| | | 0.05 | 468 | 0.16 | 455 | 3.10 | 468 |

### Example 5

A starch film was prepared by extrusion processing of a mixture of 90.5% by weight modified starch (ECOFILM®, National Starch and Chemical Company), 9% by weight polyvinylalcohol (Elvanol ® 71-30) and 0.5% by weight stearic acid and casting into a 350 µm sheet. This was then adhesively laminated to 50 µm HDPE on one side, and an 80 µm polypropylene film on the other side using a polyurethane adhesive system from Specialty Adhesives and Coatings. The lamination was performed on a standard laminating machine.

Samples were conditioned for 2 weeks at 50% and 75 % RH (for OTR) and 38°C / 90% RH (for WVTR) and measured after equilibration.

The results are collected in Table 5.

| **TABLE 5** | | | | | | | | |
|---|---|---|---|---|---|---|---|---|
| **Sample** | **Nominal % of starch layer thickness** | | **Oxygen Transmission Rate cm³/m².24h** | | | | **Water Vapour Transmission Rate g/m ².24h at 38°C, 90%RH** | |
| | | | 50% RH, 23°C | Thickness (micron) | 75% RH , 23°C | Thickness (micron) | WVTR | Thickness (micron) |
| PE/Starch/PP | 73 | PP side facing permeant | <0.05 | 484 | 0.11 | 495 | 2.21 | 498 |
| | | | <0.05 | 500 | 0.11 | 500 | 2.16 | 490 |
| | | PE side facing permeant | Not measured | | 0.10 | 500 | Not measured | |
| | | | | | 0.16 | 484 | | |

### Comparative Example 1

A starch film was prepared by extrusion processing of a mixture of 88.5% by weight modified starch (ECOFILM®, National Starch and Chemical Company), 9% by weight polyvinylalcohol (Elvanol® 71-30), 2% by weight Cloisite 20A (Southern Clay Products) and 0.5% stearic acid and casting into a 290 µm sheet.

Samples were conditioned for 2 weeks at 50% and 75 % RH, and OTR measured after equilibration. The results are collected in Table 6.

| | | | |
|---|---|---|---|
| **TABLE 6** | | | |
| **Sample** | **Oxygen Transmission Rate cm³/m².24h at 23°C, 1 atm pure oxygen** | | **Specimen thickness micron** |
| Starch Sheet | 50% RH | 0.21 | 283 |
| | | 0.21 | 289 |
| | 75% RH | 1.48 | 282 |
| | | 1.30 | 285 |

### Comparative Example 2

A starch film was prepared by extrusion processing of 100% by weight modified starch (ECOFILM®, National Starch and Chemical Company), and casting into a 300 µm sheet.

Samples were conditioned for 2 weeks at 50% and 75 % RH (for OTR) and 38°C / 90% RH (for WVTR) and measured after equilibration.

Table 7 shows the results.

| **TABLE 7** | | | | | | |
|---|---|---|---|---|---|---|
| **Sample** | **Oxygen Transmission Rate cm³/m².24h** | | | | **Water Vapour Transmission Rate g/m².24h at 38°C, 90%RH** | |
| | 50% RH, 23°C | Thickness (micron) | 75% RH, 23°C | Thickness (micron) | WVTR | Thickness (micron) |
| Starch Sheet | 0.50 | 295 | 1.30 | 260 | 337 | 290 |
| | 0.49 | 320 | 1.26 | 295 | 374 | 275 |

### Summary of Examples 1 to 5 and Comparative Examples 1 and 2

Table 8 collects the OTR and OPV (oxygen permeation value) for each of the Examples. The OPV are normalised to 1 mm thick samples, based on the core starch layer thickness only.

| **TABLE 8** | | | | | | |
|---|---|---|---|---|---|---|
| **Example** | **Core Thickness** | **Skin Thickness** | **OTR (50 %RH)** | **OPV (50% RH)** | **OTR (75% RH)** | **OPV (75% RH)** |
| | **micron** | **micron** | **[cm³/m².24h]** | **[cm³.mm/m².24h.atm]** | **[cm³/m².24h]** | **[cm³.mm/m².24h.atm]** |
| 1 | 300 | 100 | < 0.05 | < 0.05 | < 0.05 | < 0.05 |
| 2 | 150 | 50 | 0.51 | 0.08 | 0.95 | 0.14 |
| 3 | 150 | 35 | 0.53 | 0.08 | 1.10 | 0.16 |
| 4 | 350 | 50 | 0.05 | 0.02 | 0.16 | 0.06 |
| 5 | 350 | 50 | < 0.05 | < 0.05 | 0.13 | 0.05 |
| CE1 | 290 | 0 | 0.21 | 0.06 | 1.40 | 0.41 |
| CE2 | 300 | 0 | 0.50 | 0.15 | 1.30 | 0.40 |

It is evident from the results that the multilayer films of Examples 1 to 5 show excellent barrier performance. It is noted that where the core starch layer is approximately 300 micron thick, OTR is substantially reduced in samples having outer layers, relative the performance of a starch layer alone. Thinner starch core layers have low OTR at high (75%) RH relative to starch alone. Starch layers alone, in the absence of outer layers, indicate very high WVTR.

### Example 6

The approximately 500 micron starch based film of Example 1 was thermoformed into a semi-rigid support member using an automated Form-Fill-Seal machine. A whole uncooked chicken was placed within the thermoformed support member and a lidding film sealed to the periphery of the support member. The appearance of the resulting packaged chicken was excellent.

### Example 7

The shelf-life of whole chickens was studied using chickens packed according to Example 6 but utilising a 545 micron starch based film for the support member. A PE/EVOH/PE barrier film was used as the lidding film. The aim was to provide packing that would achieve a 9 day shelf life. Three different modified atmospheres were studied. These were 20% CO₂ / 80% O₂, 40% CO₂ / 70% N₂ and 40% CO₂ / 60% O₂. A non-barrier packaging was also studied.

The chickens were stored at 8°C and 4°C and were subjected to microbiological analysis at 0, 4, 6, 8 and 13 days. The chickens were tested for Total Viable Count (TVC) aerobic and anaerobic. Gas analysis was also performed at the same time intervals.

The gas analysis results indicated that the different modified atmosphere compositions remained stable throughout the 13 days of storage, except for the 20% CO₂ / 80% O₂ composition which became unstable at 13 days, showing an increase in CO₂ proportion.

All the modified atmosphere samples utilising the packing according to the invention were under the limit for TVC aerobic at 8 days at 8°C and only the 20% CO₂ / 80% O₂ sample was unacceptable at 13 days. All the modified atmosphere samples were acceptable at 4°C.

The control with a non-barrier film was unacceptable at day 13, even at 4°C.

The three modified atmospheres tested were compliant with the requirement of a 9 day shelf life, both in terms of gas composition and microbiological composition.

## Claims

1. A food package comprising:
(a) a support member comprising a multilayer film comprising:
(i) at least one starch layer comprising a modified starch and a water soluble polymer selected from the group consisting of polyvinyl acetate, polyvinyl alcohol or mixtures thereof; and
(ii) at least one other layer having a water vapour permeability coefficient less than 1 g.mm/m2.24hr.atm measured at 38°C and 90% relative humidity as measured using ASTM F 1249-01, said at least one other layer comprising a polyolefin, polyethylene terephthalate, polyvinyl chloride and polyvinyl dichloride or mixtures thereof; and
wherein the total thickness of the at least one starch layer is greater than 30% of the total thickness of the multilayer film and wherein the modified starch has a degree of substitution less than 1.5; and
(b) a lidding film wherein the lidding film is sealed to the support member such that a food product is enclosed thereby.

2. A package according to claim 1 wherein the water vapour permeability coefficient of the at least one other layer is less than 0.5 g.mm/m2.24hr.atm, preferably less than 0.2 g.mm/m2.24hr.atm, as measured using ASTM F 1249-01.

3. A package according to claim 1 or claim 2 wherein the total thickness of the at least one starch layer is greater than 40% of the total thickness of the multilayer film, more preferably greater than 50% of the total thickness of the multilayer film.

4. A package according to any one of claims 1 to 3 wherein the polyolefin is preferably selected:
- from the group consisting of ethylene homopolymers, propylene homopolymers, interpolymers of ethylene and propylene and interpolymers of ethylene or propylene with one or more C4-C10 α-olefins, cyclic olefin polymers and copolymers, biaxially orientated polypropylene, chemically modified polyolefins and mixtures thereof; or
- from the group consisting of high density polyethylene, low density polyethylene, linear low density polyethylene, polypropylene, biaxially orientated polypropylene and mixtures thereof.

5. A package according to any one of claims 1 to 4 wherein the film has an oxygen permeability coefficient (OPC) less than 0.6 cm3 mm/m2.24h.atm at 50% RH, preferably less than 0.3 cm3 mm/m2.24h.atm at 50% RH, more preferably less than 0.1 cm3 mm/m2.24h.atm at 50% RH, most preferably less than 0.05 cm3 mm/m2.24h.atm at 50% RH as measured using ASTM F 1927-98.

6. A package according to any one of claims 1 to 5 wherein the total thickness of the multilayer film is between 10 and 1000 micron.

7. A package according to any one of claims 1 to 6 wherein the at least one starch layer has a total thickness between 100 and 600 micron and the at least one other layer has a total thickness between 10 and 400 micron.

8. A package according to any one of claims 1 to 7 wherein the at least one starch layer has a total thickness between 10 and 60 micron and the at least one other layer has a total thickness between 5 and 40 micron.

9. A package according to any one of claims 1 to 8 wherein the modified starch is chemically modified so as to replace hydroxyl functionality with functionality selected from the group consisting of ethers and esters and mixtures thereof.

10. A package according to any one of claims 1 to 9 wherein the lidding film has a higher permeation rate for both moisture and gases than the multilayer film.

11. A package according to any one of claims 1 to 10 wherein the lidding film has a water vapour permeability coefficient greater than 1 g.mm/m2.24hr.atm measured at 38°C and 90% relative humidity, as measured by ASTM F 1249-01.

12. A package according to any one of claims 1 to 11 wherein the at least one starch layer comprises one or more nanomaterials.

13. A package according to claim 12 wherein the nanomaterial includes clays and modified clays.

14. A package according to claim 13, wherein the modified clay is a hydrophobically modified layered silicate clay, wherein the hydrophobically modified layered silicate clay is preferably a clay modified with a surfactant comprising long chain alkyl groups wherein polar substituents are not attached to the long chain alkyl.

15. A method of packaging a food product comprising the steps of:
a) providing a support member according to any one of claims 1 to 14;
b) providing a lidding film;
c) placing a food product on the support member;
d) extending the lidding film above the support member and product; and
e) sealing the lidding film to the support member such that the product is enclosed thereby
, wherein preferably
- one or more steps is automated; and/or
- the method comprises at least the step of thermoforming the support member, and/or
- the product is red meat, poultry, fish, cooked vegetables or a prepared meal.

## Patentansprüche

1. Lebensmittelverpackung, umfassend:
(a) ein Trägerelement mit einer Mehrschichtfolie, die umfasst:
(i) wenigstens eine Stärkeschicht, umfassend eine modifizierte Stärke und ein wasserlösliches Polymer, ausgewählt aus der Gruppe, bestehend aus Polyvinylacetat, Polyvinylalkohol oder Mischungen davon; und
(ii) wenigstens eine weitere Schicht mit einem Wasserdampfdurchlässigkeitskoeffizienten von weniger als 1g.mm/m2.24hr.atm, gemessen bei 38 °C und 90 % relativer Luftfeuchtigkeit, gemessen unter Verwendung von ASTM F 1249-01, wobei die wenigstens eine weitere Schicht ein Polyolefin, Polyethylenterephthalat, Polyvinylchlorid und Polyvinyldichlorid oder Mischungen davon umfasst; und
wobei die Gesamtdicke der wenigstens einen Stärkeschicht mehr als 30 % der Gesamtdicke der Mehrschichtfolie beträgt und wobei die modifizierte Stärke einen Substitutionsgrad von weniger als 1,5 aufweist; und
(b) eine Abdeckfolie, wobei die Abdeckfolie mit dem Trägerelement so versiegelt ist, dass ein Lebensmittelprodukt darin eingeschlossen ist.

2. Verpackung nach Anspruch 1, wobei der Wasserdampfdurchlässigkeitskoeffizienten der wenigstens einen weiteren Schicht weniger als 0,5 g.mm/m2.24hr.atm, vorzugsweise weniger als 0,2 g.mm/m2.24hr.atm, gemessen nach ASTM F 1249-01, beträgt.

3. Verpackung nach Anspruch 1 oder Anspruch 2, wobei die Gesamtdicke der wenigstens einen Stärkeschicht mehr als 40 % der Gesamtdicke der Mehrschichtfolie, bevorzugter mehr als 50 % der Gesamtdicke der Mehrschichtfolie beträgt.

4. Verpackung nach einem der Ansprüche 1 bis 3, wobei das Polyolefin vorzugsweise ausgewählt ist:
- aus der Gruppe bestehend aus Ethylenhomopolymeren, Propylenhomopolymeren, Interpolymeren von Ethylen und Propylen und Interpolymeren von Ethylen oder Propylen mit einem oder mehreren C4-C10-α-Olefinen, cyclischen Olefinpolymeren und -copolymeren, biaxial orientiertem Polypropylen, chemisch modifizierten Polyolefinen und Mischungen davon; oder
- aus der Gruppe bestehend aus Polyethylen hoher Dichte, Polyethylen niedriger Dichte, lineares Polyethylen niedriger Dichte, Polypropylen, biaxial orientiertes Polypropylen und Mischungen davon.

5. Verpackung nach einem der Ansprüche 1 bis 4, wobei die Folie einen Sauerstoffdurchlässigkeitskoeffizienten (OPC) von weniger als 0,6 cm3 mm/m2.24h.atm bei 50 % RH, vorzugsweise weniger als 0,3 cm3 mm/m2.24h.atm bei 50 % RH, bevorzugter weniger als 0,1 cm3 mm/m2.24h.atm bei 50 % RH, am meisten bevorzugt weniger als 0,05 cm3 mm/m2.24h.atm bei 50 % RH, gemessen unter Verwendung von ASTM F 1927-98, aufweist.

6. Verpackung nach einem der Ansprüche 1 bis 5, wobei die Gesamtdicke der Mehrschichtfolie zwischen 10 und 1000 Mikron beträgt.

7. Verpackung nach einem der Ansprüche 1 bis 6, wobei die wenigstens eine Stärkeschicht eine Gesamtdicke zwischen 100 und 600 Mikron und die wenigstens eine weitere Schicht eine Gesamtdicke zwischen 10 und 400 Mikron aufweist.

8. Verpackung nach einem der Ansprüche 1 bis 7, wobei die wenigstens eine Stärkeschicht eine Gesamtdicke zwischen 10 und 60 Mikron und die wenigstens eine weitere Schicht eine Gesamtdicke zwischen 5 und 40 Mikron aufweist.

9. Verpackung nach einem der Ansprüche 1 bis 8, wobei die modifizierte Stärke chemisch so modifiziert ist, dass die Hydroxylfunktionalität durch eine Funktionalität ersetzt wird, ausgewählt aus der Gruppe, bestehend aus Ethern und Estern und Mischungen davon.

10. Verpackung nach einem der Ansprüche 1 bis 9, wobei die Abdeckfolie eine höhere Permeationsrate sowohl für Feuchtigkeit als auch für Gase aufweist als die Mehrschichtfolie.

11. Verpackung nach einem der Ansprüche 1 bis 10, wobei die Abdeckfolie einen Wasserdampfdurchlässigkeitskoeffizienten von mehr als 1 g.mm/m2.24hr.atm, gemessen bei 38 °C und 90 % relativer Luftfeuchtigkeit, aufweist, gemessen nach ASTM F 1249-01.

12. Verpackung nach einem der Ansprüche 1 bis 11, wobei die wenigstens eine Stärkeschicht ein oder mehrere Nanomaterialien umfasst.

13. Verpackung nach Anspruch 12, wobei das Nanomaterial Tone und modifizierte Tone einschließt.

14. Verpackung nach Anspruch 13, wobei der modifizierte Ton ein hydrophob modifizierter Schichtsilikatton ist, wobei der hydrophob modifizierte Schichtsilikatton vorzugsweise ein Ton ist, der mit einem Tensid modifiziert ist, das langkettige Alkylgruppen umfasst, wobei polare Substituenten nicht an das langkettige Alkyl gebunden sind.

15. Verfahren zum Verpacken eines Lebensmittelprodukts, das die folgenden Schritte umfasst:
a) Bereitstellen eines Trägerelements nach einem der Ansprüche 1 bis 14;
b) Bereitstellen einer Abdeckfolie;
c) Ablegen eines Lebensmittelprodukts auf dem Trägerelement;
d) Ausfahren der Abdeckfolie über das Trägerelement und das Produkt; und
e) Versiegeln der Abdeckfolie mit dem Trägerelement, so dass das Produkt darin eingeschlossen wird, wobei vorzugsweise
- ein oder mehrere Schritte automatisiert sind; und/oder
- das Verfahren wenigstens den Schritt des Thermoformens des Trägerelements umfasst, und/oder
- das Produkt rotes Fleisch, Geflügel, Fisch, gekochtes Gemüse oder eine zubereitete Mahlzeit ist.

## Revendications

1. Un emballage alimentaire comprenant :
(a) un élément de support comprenant un film multicouche comprenant :
(i) au moins une couche d'amidon comprenant un amidon modifié et un polymère hydrosoluble choisi dans le groupe constitué par le poly(acétate de vinyle), le poly(alcool vinylique) ou leurs mélanges ; et
(ii) au moins une autre couche ayant un coefficient de perméabilité à la vapeur d'eau inférieur à 1 g.mm/m2.24hr.atm mesuré à 38°C et 90% d'humidité relative telle que mesurée en utilisant ASTM F 1249-01,
ladite au moins une autre couche comprenant une polyoléfine, du polyéthylène téréphtalate, poly(chlorure de vinyle) et poly(dichlorure de vinyle) ou leurs mélanges; et dans lequel l'épaisseur totale de la au moins une couche d'amidon est supérieure à 30% de l'épaisseur totale du film multicouche et dans lequel l'amidon modifié présente un degré de substitution inférieur à 1,5; et
(b) un film d'operculage dans lequel le film d'operculage est scellé à l'élément de support de telle sorte qu'un produit alimentaire soit enfermé par ceux-ci.

2. Emballage selon la revendication 1, dans lequel le coefficient de perméabilité à la vapeur d'eau de la au moins une autre couche est inférieure à 0,5 g.mm/m2.24hr.atm, de préférence moins de 0.2 g.mm/m2.24hr.atm, tel que mesuré en utilisant ASTM F 1249-01.

3. Emballage selon la revendication 1 ou la revendication 2, dans lequel l'épaisseur totale de l'au moins une couche d'amidon est supérieure à 40% de l'épaisseur totale du film multicouche, plus préférablement supérieure à 50% de l'épaisseur totale du film multicouche.

4. Emballage selon l'une quelconque des revendications 1 à 3 dans lequel la polyoléfine est de préférence choisie :
- du groupe comprenant les homopolymères d'éthylène, les homopolymères de propylène, les interpolymères d'éthylène et de propylène et les interpolymères d'éthylène ou de propylène avec une ou plusieurs α-oléfines en C4-C10, les polymères et copolymères d'oléfines cycliques, le polypropylène à orientation biaxiale, les polyoléfines chimiquement modifiées et leurs mélanges ; ou
- dans le groupe constitué de polyéthylène haute densité, polyéthylène basse densité, polyéthylène basse densité linéaire, polypropylène, polypropylène à orientation biaxiale et leurs mélanges.

5. Emballage selon l'une quelconque des revendications 1 à 4, dans lequel le film a un coefficient de perméabilité à l'oxygène (OPC) inférieur à 0,6 cm3 mm/m2.24h.atm à 50% HR, de préférence inférieur à 0.3 cm3 mm/m2.24h.atm à 50% HR, plus préférablement moins de 0,1 cm3 mm/m2.24h.atm à 50% HR, le plus préférablement moins de 0,05 cm3 mm/m2.24h.atm à 50% HR tel que mesuré selon ASTMF 192798.

6. Emballage selon l'une quelconque des revendications 1 à 5 dans lequel l'épaisseur totale du film multicouche est comprise entre 10 et 1000 microns.

7. Emballage selon l'une quelconque des revendications 1 à 6 dans lequel la au moins une couche d'amidon a une épaisseur totale comprise entre 100 et 600 microns et la au moins une autre couche a une épaisseur totale comprise entre 10 et 400 microns.

8. Emballage selon l'une quelconque des revendications 1 à 7 dans lequel la au moins une couche d'amidon a une épaisseur totale comprise entre 10 et 60 microns et la au moins une autre couche a une épaisseur totale comprise entre 5 et 40 microns.

9. Emballage selon l'une quelconque des revendications 1 à 8, dans lequel l'amidon modifié est chimiquement modifié de manière à remplacer la fonctionnalité hydroxyle par des fonctionnalités choisies dans le groupe consistant en éthers et esters et leurs mélanges.

10. Emballage selon l'une quelconque des revendications 1 à 9, dans lequel le film d'operculage a un taux de perméation à la fois plus élevé pour l'humidité et les gaz que le film multicouche.

11. Emballage selon l'une quelconque des revendications 1 à 10, dans lequel le film d'operculage a un coefficient de perméabilité à la vapeur d'eau supérieur à 1. g.mm/m2.24hr.atm mesuré à 38 0 C et 90% d'humidité relative, tel que mesuré par ASTM F 1249-01.

12. Emballage selon l'une quelconque des revendications 1 à 11 dans lequel la au moins une couche d'amidon comprend un ou plusieurs nanomatériaux.

13. Emballage selon la revendication 12, dans lequel le nanomatériau comprend des argiles et des argiles modifiées.

14. Emballage selon la revendication 13, dans lequel l'argile modifiée est une argile de silicate en couches modifiée de manière hydrophobe, dans laquel l'argile de silicate en couches modifiée de manière hydrophobe est de préférence une argile modifiée avec un tensioactif comprenant des groupes alkyles à longue chaîne dans lequel des substituants polaires ne sont pas attachés à l'alkyle à longue chaîne.

15. Procédé d'emballage d'un produit alimentaire comprenant les étapes consistant à :
a) fournir un élément de support selon l'une quelconque des revendications 1 à 14;
b) fournir un film d'operculage ;
c) placer un produit alimentaire sur l'élément de support ;
d) étendre le film d'operculage au-dessus de l'élément de support et du produit ; et
e) sceller le film d'operculage sur l'élément de support de telle sorte que le produit soit enfermé par ceux-ci,
dans lequel de préférence
- une ou plusieurs étapes sont automatisées ; et/ou
- le procédé comprend au moins l'étape de thermoformage de l'élément de support, et/ou
- le produit et de la viande rouge, de la volaille, du poisson, des légumes cuites ou un repas préparé.
